# EUROPEAN PATENT APPLICATION

(11) **EP 4 763 570 A1**
(43) Date of publication of application: **24.06.2026**
(21) Application number: 25224663.2
(22) Date of filing: 17.12.2025
(51) Int. Cl.: B60K 28/06, B60W 50/14

(54) **DRIVING SUPPORT CONTROL DEVICE, DRIVING SUPPORT METHOD, AND COMPUTER PROGRAM**

(30) Priority: 19.12.2024 JP 2024224269
(71) Applicant: Toyota Jidosha Kabushiki Kaisha, Toyota-shi, Aichi-ken 471-8571 (JP)
(72) Inventor: TANAKA, Yusuke, TOYOTA-SHI, AICHI-KEN, 471-8571 (JP); FUKAYA, Motohiro, TOYOTA-SHI, AICHI-KEN, 471-8571 (JP); TOSHIMA, Kohei, TOYOTA-SHI, AICHI-KEN, 471-8571 (JP); MORIMOTO, Kazuhiro, TOYOTA-SHI, AICHI-KEN, 471-8571 (JP)
(74) Representative: Cabinet Beau de Loménie

(57) **Abstract**

The driving support control device (6) for a vehicle (100) is configured to execute driving support for responding to driver abnormality in response to it being judged that a driver of the vehicle (100) is in an abnormal state in which it is difficult to continue driving of the vehicle (100). The driving support includes notification control being started after it is judged that the driver is in the abnormal state and issuing a notification to the driver for a predetermined time, and deceleration control being started after the notification control and decelerating the vehicle (100). The driving support control device (6) is configured to extend the predetermined time when a predetermined operation is detected during the notification control, compared to when the predetermined operation is not detected.

## Description

### TECHNICAL FIELD

The present invention relates to a driving support control device, a driving support method, and a computer program.

### BACKGROUND ART

Patent Literature 1 discloses a conventional vehicle driving control device which is configured to judge whether a driver is in an abnormal state, and execute deceleration and stop control decelerating the vehicle and maintaining the vehicle in a stopped state, when the driver is in the abnormal state.

### CITATION LIST

### PATENT LITERATURE

PTL 1 Japanese Unexamined Patent Publication (Kokai) No. 2021-109559

### SUMMARY

### TECHNICAL PROBLEM

However, in the vehicle driving control device of the prior art described above, if it is mistakenly judged that the driver of the vehicle is in an abnormal state when the driver is actually in a normal state, a normal driver cannot stop deceleration and stop control at an appropriate stage before deceleration and stop control actually begins, i.e., before the system actually begins to intervene in driving.

The present invention has been conceived in light of this problem, and an object thereof is to enable a normal driver to stop deceleration and stop control at an appropriate stage before deceleration and stop control actually starts when the driver is erroneously judged to be in an abnormal state even though the driver is actually in a normal state.

### SOLUTION TO PROBLEM

In order to solve the above problem, the driving support control device for a vehicle according to one aspect of the present invention is configured to execute driving support for responding to driver abnormality in response to it being judged that a driver of the vehicle is in an abnormal state in which it is difficult to continue driving of the vehicle, the driving support includes notification control being started after it is judged that the driver is in the abnormal state and issuing a notification to the driver for a predetermined time, and deceleration control being started after the notification control and decelerating the vehicle, and the driving support control device is configured to extend the predetermined time when a predetermined operation is detected during the notification control, compared to when the predetermined operation is not detected.

Further, the driving support method according to one aspect of the present invention is performed by a control device of a vehicle, and includes executing driving support for responding to driver abnormality in response to it being judged that a driver of the vehicle is in an abnormal state in which it is difficult to continue driving of the vehicle, the driving support includes notification control being started after it is judged that the driver is in the abnormal state and issuing a notification to the driver for a predetermined time, and deceleration control being started after the notification control and decelerating the vehicle, and the method further includes extending the predetermined time when a predetermined operation is detected during the notification control, compared to when the predetermined operation is not detected.

Further, the computer program according to one aspect of the present invention causes a computer to execute processing of executing driving support for responding to driver abnormality in response to it being judged that a driver of the vehicle is in an abnormal state in which it is difficult to continue driving of the vehicle, the driving support includes notification control being started after it is judged that the driver is in the abnormal state and issuing a notification to the driver for a predetermined time, and deceleration control being started after the notification control and decelerating the vehicle, and the computer program causes the computer to further execute processing of extending the predetermined time when a predetermined operation is detected during the notification control, compared to when the predetermined operation is not detected.

### ADVANTAGEOUS EFFECTS OF INVENTION

According to these aspects of the present invention, if the driver is actually normal, driving support can be stopped at the notification control stage before entering deceleration control, and the stopping can be made easier.

### BRIEF DESCRIPTION OF DRAWINGS

FIG. 1 is a schematic view of a vehicle according to an embodiment of the present invention.
FIG. 2 is a flowchart detailing suspension processing for driving support for driver abnormality according to an embodiment of the present invention.
FIG. 3 is a flowchart detailing notification control extension processing of driving support for driver abnormality according to an embodiment of the present invention.

### DESCRIPTION OF EMBODIMENTS

Embodiments of the present invention will be described in detail below with reference to the drawings. Note that in the following description, identical constituent elements have been assigned the same reference signs.

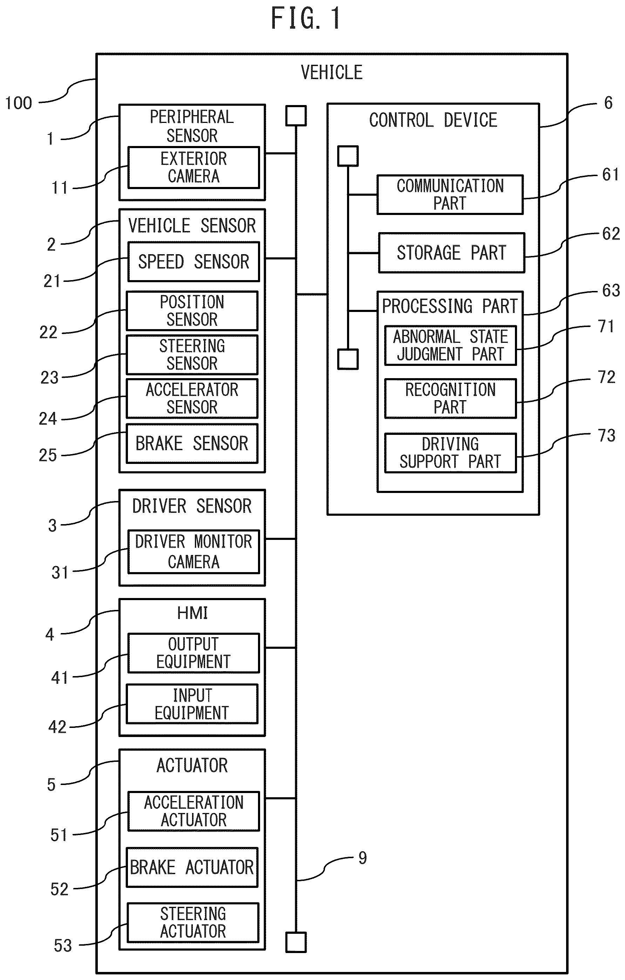

FIG. 1 is a schematic view of a vehicle 100 according to an embodiment of the present invention.

The vehicle 100 includes a peripheral sensor 1, a vehicle sensor 2, a driver sensor 3, a human machine interface (HMI) 4, an actuator 5, and a control device 6. The peripheral sensor 1, the vehicle sensor 2, the driver sensor 3, the HMI 4, the actuator 5, and the control device 6 are communicatively connected to each other via an in-vehicle network 9 which complies with a standard such as control device area network.

The peripheral sensor 1 is a sensor for generating peripheral data representing the situation around the vehicle 100. The vehicle 100 according to the present embodiment includes, as the peripheral sensor 1, one or a plurality of exterior cameras 11 for capturing the surroundings of the vehicle 100. The exterior camera 11 captures the surroundings of the vehicle 100 at a predetermined frame rate (for example, 10 [Hz] to 40 [Hz]) and generates a surrounding image showing the surroundings of the vehicle 100. The exterior camera 11 transmits the generated surrounding image to the control device 6 as surrounding data every time it generates a surrounding image.

In addition to the exterior camera 11, a ranging sensor for measuring the distance to a target or a feature present around the vehicle 100 may be provided as the peripheral sensor 1. Examples of the ranging sensor include LiDAR (Light Detection And Ranging) which irradiates radar light and measures distance based on the reflected light, and a millimeter wave radar sensor which irradiates radio waves and measures distance based on the reflected waves.

The vehicle sensor 2 is a sensor for acquiring vehicle data representing the state of the vehicle 100. The vehicle 100 according to the present embodiment includes, as the vehicle sensor 2, a speed sensor 21 for acquiring speed data representing the traveling speed of the vehicle 100, a position sensor 22 for acquiring current position data representing the current position of the vehicle 100 such as latitude and longitude, a steering sensor 23 for acquiring data related to steering operations including at least one of steering grip, steering torque, and steering angle, an accelerator sensor 24 for acquiring data related to accelerator operation such as the amount of depression of the accelerator pedal, and a brake sensor 25 for acquiring data related to brake operation such as detection of operation input of the brake pedal. However, the vehicle sensor 2 is not limited to these sensors. Each type of data acquired by each sensor 21 to 25 is transmitted to the control device 6 as vehicle data.

The driver sensor 3 is a sensor for generating driver data representing the state of the driver. The vehicle 100 according to the present embodiment includes, as the driver sensor 3, a driver monitor camera 31 for capturing the appearance of the driver including the face of the driver. The driver monitor camera 31 captures the appearance of the driver at a predetermined frame rate (for example, 10 [Hz] to 40 [Hz]) and generates an appearance image showing the appearance of the driver. The driver monitor camera 31 transmits the generated appearance image to the control device 6 as driver data every time it generates an appearance image of the driver.

The HMI 4 is a user interface for exchanging information between the vehicle 100 and the occupants thereof. The HMI 4 includes output equipment 41 for notifying the vehicle occupants via the bodily senses (for example, vision, hearing, touch, etc.) of the vehicle occupants, and input equipment 42 with which the vehicle occupants can perform input operations and response operations. The output equipment 41 is, for example, a display (for example, a meter display, a center display, a heads-up display, etc.) and a speaker. The input equipment 42 is, for example, a touch panel and a microphone.

The HMI 4 notifies the vehicle occupants of information corresponding to the output signal received from the control device 6 via the output equipment 41, and transmits data input by the vehicle occupants to the control device 6 via the input equipment 42.

The HMI 4 may be installed in advance in the vehicle 100, or may be a terminal such as a smartphone owned by the vehicle occupants (driver and passengers). In the latter case, for example, information may be exchanged between the vehicle 100 and the terminal of the vehicle occupants by short-range wireless communication, or information may be exchanged indirectly via the server by communicating between the terminal of the vehicle occupants and an external server (not illustrated).

The actuator 5 is a device used for driving control of the vehicle 100. The vehicle 100 according to the present embodiment includes, as the actuator 5, an acceleration actuator 51 (for example, at least one of an engine and a motor) for performing acceleration control of the vehicle 100, a brake actuator 52 (for example, a hydraulic actuator) for performing brake control of the vehicle 100, and a steering actuator 53 (for example, a steering motor) for performing steering control of the vehicle 100.

The control device 6 is an electronic control unit (ECU) including a communication part 61, a storage part 62, and a processing part 63.

The communication part 61 includes an interface circuit for connecting the control device 6 to the in-vehicle network 9. The communication part 61 supplies various data received from the outside to the processing part 63. The communication part 61 also outputs various signals output from the processing part 63 to the outside.

The storage part 62 includes a storage medium such as a hard disk drive (HDD), a solid disk drive (SSD), or a semiconductor memory, and stores various computer programs and data used in the processing by the processing part 63.

The processing part 63 includes one or more central processing units (CPUs) and peripheral circuits therefor, and executes various computer programs stored in the storage part 62. The processing part 63 is, for example, a processor. The processing part 63 may further include other arithmetic circuits such as a logic arithmetic unit, a numerical arithmetic unit, or a graphic processing unit. The processing part 63 executes processing in accordance with the computer programs, thereby functioning as an abnormal state judgment part 71, a recognition part 72, and a driving support part 73, and operates as a functional part (module) for realizing predetermined functions. In the following description, when processing in which the functional parts 71 to 73 are the subject is described, it indicates that the processing part 63 is executing a program for realizing each of the functional parts 71 to 73.

Specific processing executed by the control device 6 will be described below. Specifically, the contents of each of the functional parts 71 to 73 realized by the processing part 63 executing the processing according to the computer program will be described.

The abnormal state judgment part 71 judges whether the driver has entered into an abnormal state (hereinafter simply referred to as an "abnormal state") in which it is difficult to continue driving due to, for example, a sudden change in physical condition, etc. In the present embodiment, the abnormal state judgment part 71 judges that the driver has entered into an abnormal state when a predetermined abnormality presumption state continues for a predetermined judgment time T1 [s].

The abnormality presumption state is a state in which the driver is considered to be in an abnormal state. Examples of abnormality presumption states include a state in which the driver has their eyes closed, a state in which the posture of the driver is distorted, and a state in which the driver is not operating the steering wheel unless the driving support that allows hands-free driving is being executed. A state in which the posture of the driver is distorted is, for example, a state in which the driver lies face down, looks down, or leans back due to muscle relaxation caused by loss of consciousness, or the head or upper body of the driver is tilted or fallen to the side, or a state in which the driver is arched due to rigidity caused by epilepsy, etc.

Whether the driver has their eyes closed, the posture of the driver is distorted, or the steering wheel is not being operated can be judged from, for example, the appearance of the driver based on the image of the driver monitor camera 31. Furthermore, whether the steering wheel is not being operated can be judged based on, for example, when data related to the steering operation is acquired by the steering sensor 23, such data and the image of the driver monitor camera 31.

The recognition part 72 recognizes targets and features around the vehicle 100. The recognition part 72 sequentially inputs the surrounding images received from the exterior camera 11 to a classifier, for example, to recognize targets in the surrounding images, such as other vehicles, motorcycles, and pedestrians, and features such as curbs, fences, and other similar structures (hereinafter referred to as "dividing features") and road markings (for example, dividing lines that define driving lanes). The classifier can be, for example, a convolutional neural network (CNN) having multiple convolution layers connected in series from the input side to the output side. The recognition part 72 also calculates the distances from the vehicle 100 to the targets and features using, for example, the standard sizes of the targets and features stored in the storage part 62 for each type of target and feature and the sizes of the targets and features recognized in the surrounding images, and calculates the positions of the targets and features. Note that the method of recognizing the targets and features is not limited to this method, and various known methods may be used for recognition.

The driving support part 73 controls the actuator 5 based on the targets and features recognized by the recognition part 72, and executes driving support involving driving control of the vehicle 100. In the present embodiment, the driving support part 73 can execute driving support involving driving control of the vehicle 100 at a driving control level of level 3 defined by the Society of Automotive Engineers (SAE), and specifically, a driving control level that does not require the driver to operate each of the actuators 51 to 53 and monitor the surroundings. The driving support part 73 can also execute driving support involving driving control of the vehicle 100 at a driving control level where the driver is involved in driving the vehicle 100, for example, a driving control level of level 1 or level 2 as defined by the SAE.

As one of the driving supports accompanying the driving control of the vehicle 100, when the driver is judged to be in an abnormal state, the driving support part 73 executes driving support for driver abnormality to respond to the driver abnormality. Specifically, when it is judged that the driver is in an abnormal state, the driving support part 73 first executes notification control to notify the driver of a control notice, alarm, or the like for a predetermined time via the HMI 4. Thereafter, after the notification control, the driving support part 73 executes deceleration and stop control (more specifically, deceleration control and stop maintenance control) to decelerate the vehicle 100 and maintain the vehicle 100 in a stopped state. Specifically, the driving support for driver abnormality includes the notification control and the deceleration and stop control (deceleration control and stop maintenance control).

Furthermore, how the vehicle 100 is decelerated and stopped is not particularly limited as long as the risk of contact with road users outside the vehicle when executing the deceleration and stop control is taken into consideration. For example, when the dividing line of the lane of the vehicle can be recognized, the vehicle 100 is decelerated along the dividing line of the lane of the vehicle and maintained in the stopped state, when the dividing line of the lane of the vehicle cannot be recognized, the vehicle 100 is decelerated along the trajectory of the vehicle ahead and maintained in the stopped state, and when neither the dividing line of the lane of the vehicle nor the vehicle ahead can be recognized, the vehicle 100 can be decelerated while moving straight and maintained in the stopped state. Furthermore, for example, in consideration of the rescue of the driver and the safety of disembarkation of passengers, the lane may be changed to move the vehicle to the lane on the roadway side or to the shoulder.

In the present embodiment, when a predetermined suspension condition is satisfied during the driving support for driver abnormality, the driving support is suspended. The suspension condition is a condition by which it can be judged that the state of the driver is a normal state in which driving can be continued. For example, in the present embodiment, each time any one of a steering operation, an accelerator operation, and a brake operation is performed once (i.e., each time an override is performed once), it is judged that a cancel operation of the driving support for driver abnormality has been performed once, and the suspension condition of the driving support for driver abnormality is determined to be satisfied when the detection number N of the cancel operation has become equal to or greater than a predetermined suspension judgment threshold NTH. Though the value of the suspension judgment threshold NTH is set to 2 in the present embodiment, the suspension judgment threshold NTH can be set to any value which is equal to or greater than 1. Further, in the present embodiment, regarding the judgment of whether each of the steering operation, accelerator operation, and brake operation has been performed, it may be determined that the operation has been performed, for example, when the operation change amount of each operation becomes equal to or greater than a predetermined amount, or simply when an operation input for each operation is detected.

As a result, even if the driver is mistakenly judged to be in an abnormal state despite being in a normal state and driving support for driver abnormality is started, the driver can cancel the driving support for driver abnormality by executing a cancel operation, thereby satisfying the suspension condition.

However, when it is judged that the driver is in an abnormal state despite being in a normal state and deceleration and stop control is actually started, deceleration of the vehicle 100 will be performed contrary to the will of the driver. Thus, when it is judged that the driver is in an abnormal state despite being in a normal state, it is desirable for the driver to be able to establish a suspension condition before deceleration and stop control is actually started, and specifically, at the notification control stage before the system actually starts intervening in the driving operation.

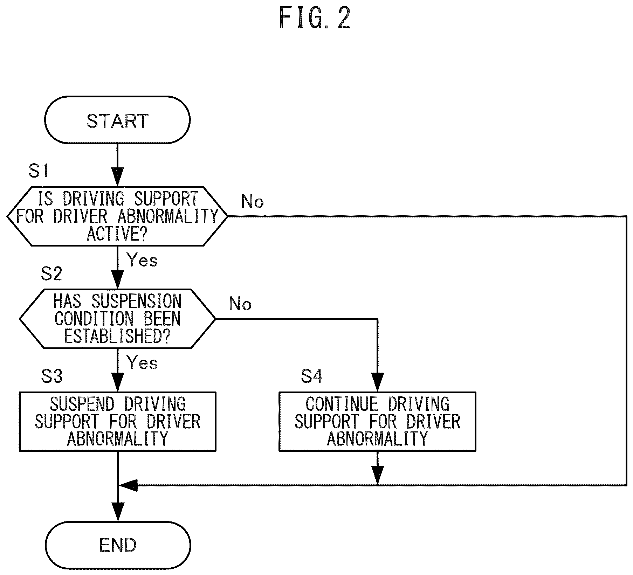

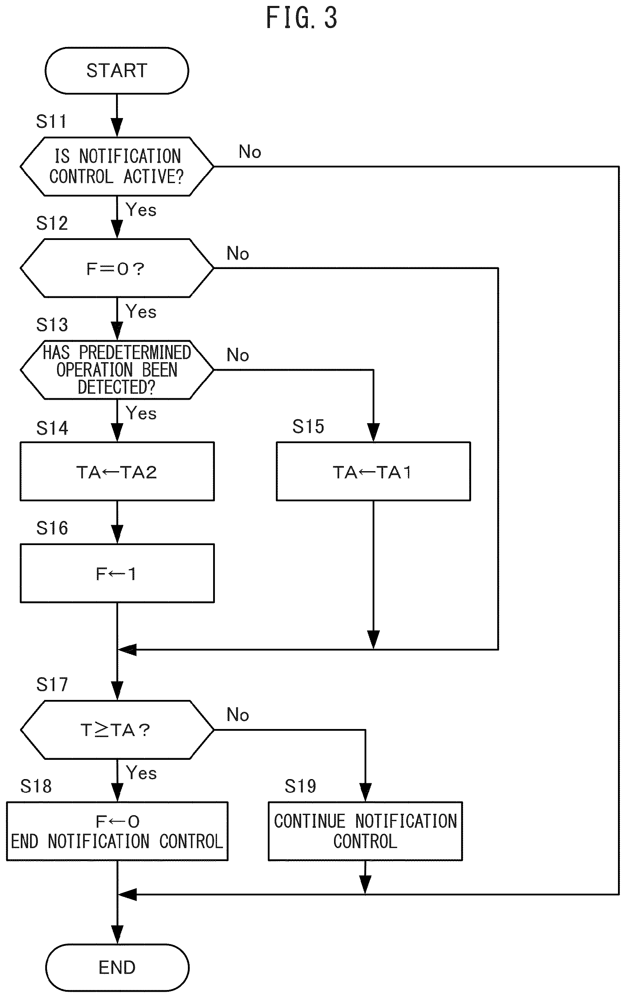

In the present embodiment, when a predetermined operation that can be executed by the driver is detected during notification control, the notification control period is extended since the driver may be in a normal state. As a result, when the driver is in a normal state, it becomes easy to establish a suspension condition for the driving support for driver abnormality during the notification control period before entering deceleration and stop control. Conversely, since the deceleration and stop control is started without extending the notification control period when the driver is actually in an abnormal state, the vehicle can be decelerated and stopped soon after the driver abnormality is detected. The details of the driving support for driver abnormality according to the present embodiment will be described below with reference to FIGS. 2 and 3.

FIG. 2 is a flowchart detailing the processing for suspending the driving support for driver abnormality according to the present embodiment, which is executed by the driving support part 73, and in turn, the control device 6. The control device 6 repeatedly executes this routine at a predetermined calculation cycle.

In step S1, the control device 6 judges whether the vehicle is in driving support for driver abnormality. When the vehicle is in driving support for driver abnormality, the control device 6 proceeds to the processing of step S2. Conversely, when the vehicle is not in driving support for driver abnormality, the control device 6 ends the current processing.

In step S2, the control device 6 judges whether the suspension condition for the driving support for driver abnormality has been established. If the suspension condition for the driving support for driver abnormality has been established, the control device 6 proceeds to the processing of step S3. Conversely, if the suspension condition for the driving support for driver abnormality has not been established, the control device 6 proceeds to the processing of step S4.

In step S3, the control device 6 suspends the driving support for driver abnormality.

In step S4, the control device 6 continues the driving support for driver abnormality.

FIG. 3 is a flowchart detailing notification control extension processing of the driving support for driver abnormality according to the present embodiment, which is executed by the driving support part 73 and, in turn, the control device 6. The control device 6 repeatedly executes this routine at a predetermined calculation cycle.

In step S11, the control device 6 judges whether or not the notification control of the driving support for driver abnormality is active. When the notification control is active, the control device 6 proceeds to the processing of step S12. Conversely, when the notification control is not active, the control device 6 ends the current processing.

In step S12, the control device 6 judges whether a notification control extension flag F is 0. The notification control extension flag F is a flag which is set to 1 when notification control is extended (when a notification control time TA is set to a second execution time TA2, which will be described later), and the initial value thereof is 0. If the notification control extension flag F is 0, the control device 6 proceeds to the processing of step S13. Conversely, if the notification control extension flag F is 1, the control device 6 proceeds to the processing of step S17.

In step S13, the control device 6 judges whether a predetermined operation which can be executed by the driver has been detected. If the predetermined operation has been detected, the control device 6 proceeds to the processing of step S14. Conversely, if the predetermined operation has not been detected, the control device 6 proceeds to the processing of step S15.

For example, in the case in which the suspension judgment threshold NTH is set to a value which is equal to or greater than 2 and driving support for driver abnormality is suspended when the cancel operation is detected multiple times in the manner of the present embodiment, the first cancel operation can be made the predetermined operation.

In step S14, the control device 6 sets the notification control time (the period during which the notification control continues) TA [s] to the second execution time TA2, which is longer than a normal first execution time TA1.

In step S15, the control device 6 sets the notification control time TA to the normal first execution time TA1.

In step S16, the control device 6 sets the notification control extension flag F to 1.

In step S17, the control device 6 judges whether the elapsed time T [s] from the start of the notification control is equal to or longer than the notification control time TA. If the elapsed time T is equal to or longer than the notification control time TA, the control device 6 proceeds to the processing of step S18. Conversely, if the elapsed time T is shorter than the notification control time TA, the control device 6 proceeds to the processing of step S19.

In step S18, the control device 6 resets the notification control extension flag F to 0, ends the notification control, and starts the deceleration and stop control.

In step S19, the control device 6 continues the notification control.

The control device 6 (driving support control device) of the vehicle 100 according to the present embodiment described above is configured to execute driving support for driver abnormality for responding to driver abnormality in response to it being judged that the driver of the vehicle 100 is in an abnormal state in which it is difficult to continue driving of the vehicle 100, the driving support for driver abnormality includes notification control being started after it is judged that the driver is in an abnormal state and issuing a notification to the driver for a predetermined time, and deceleration control being started after the notification control and decelerating the vehicle, and the control device 6 is configured to extend the predetermined time when a predetermined operation is detected during the notification control, compared to when the predetermined operation is not detected.

Thus, according to the present embodiment, when the predetermined operation is detected during notification control, and specifically, when there is a possibility that the driver is normal, the period of the notification control is extended. Thus, when the driver is normal, the driver can easily perform a cancel operation of the driving support for driver abnormality during the notification control period before entering deceleration control to establish the suspension condition. Conversely, since deceleration and stop control is started without extending the notification control period when the driver is actually in an abnormal state, the vehicle can be stopped soon after driver abnormality is detected.

In the present embodiment, the control device 6 is configured to suspend the driving support for driver abnormality when a predetermined cancel operation is executed multiple times during the driving support, and the first operation of the cancel operation is made the predetermined operation.

By requesting multiple cancel operations to suspend the driving support for driver abnormality in this manner, even if the driver falls into an abnormal state such as a state of tension, stiffness, or weakness and unintentionally operates the pedals or steering (i.e., overrides) once, the driving support for driver abnormality will not be suspended. Thus, it is possible to prevent suspension of the driving support for driver abnormality due to unintentional override even though the driver is in an abnormal state.

Conversely, when multiple cancel operations are requested to suspend the driving support for driver abnormality, the effort and time required to complete the cancel operations will increase, thus making it relatively difficult for the driver in a normal state to complete the multiple cancel operations during notification control to suspend the driving support for driver abnormality. However, according to the present embodiment, since the period of notification control is extended by performing the first operation, it becomes easy to establish the suspension condition by performing the cancel operation of the driving support for driver abnormality during the notification control period before entering deceleration control.

Furthermore, since it is considered that the driver is likely to be normal when the first cancel operation is detected, the notification control period can be extended in appropriate scenes where the driver is likely to be normal.

Though the embodiments of the present invention have been described above, the embodiments described above merely illustrate some of the application examples of the present invention, and are not intended that the technical scope of the present invention be limited to the specific configurations of the embodiments described above.

For example, in the above embodiment, in addition to or in place of the first cancel operation, an input operation which can be performed by the driver other than the steering operation, accelerator operation, and brake operation (i.e., an input operation which can be performed by the driver other than the driving operation related to steering, acceleration, and braking) may be set as the predetermined operation. Examples of such input operations include the operation of various switches (such as the hazard switch, an ON/OFF switch for various driving support, a driving mode select switch, an air conditioner operation switch, and an audio operation switch) provided on the instrument panel or steering wheel, and the operation of a shift lever, but are not limited to these.

Furthermore, in the above embodiment, for example, if it is judged that an operation has been performed when the operation change amount of each of the steering operation, accelerator operation, and brake operation becomes equal to or greater than a predetermined amount, a cancel operation in which the operation change amount is less than the predetermined amount may be made the predetermined operation in addition to or in place of the first cancel operation.

As a result, even when some input operation, such as the operation of a switch, is performed or when a small cancel operation with an operation change amount less than the predetermined amount is detected, it is considered that the driver is likely to be normal, and thus, the notification control period can be extended in appropriate scenes where the driver is likely to be normal.

Furthermore, if the value of the suspension judgment threshold NTH is set to 1 and driving support for driver abnormality is suspended when a cancel operation is detected once, input operations which can be performed by the driver other than the steering operation, accelerator operation, and brake operation may be made the predetermined operation, or a cancel operation in which the operation change amount is less than a predetermined amount may be made the predetermined operation, or both may be made the predetermined operation.

Furthermore, though the notification control period is extended only once when the predetermined operation is detected in the above embodiment, the notification control period may be extended each time the predetermined operation is detected until the detection number of the predetermined operation reaches a predetermined upper limit.

Furthermore, for example, in the embodiments described above, the computer program executed by the control device 6 may be provided in a form recorded on a computer-readable portable recording medium such as a semiconductor memory, a magnetic recording medium, or an optical recording medium, or may be provided as a computer program product.

### REFERENCE SIGNS LIST

- 6: control device (driving support control device)
- 100: vehicle

## Claims

1. A driving support control device (6) for a vehicle (100), configured to:
execute driving support for responding to driver abnormality in response to it being judged that a driver of the vehicle (100) is in an abnormal state in which it is difficult to continue driving of the vehicle (100),
wherein the driving support includes notification control being started after it is judged that the driver is in the abnormal state and issuing a notification to the driver for a predetermined time, and deceleration control being started after the notification control and decelerating the vehicle (100), and
the driving support control device (6) is configured to extend the predetermined time when a predetermined operation is detected during the notification control, compared to when the predetermined operation is not detected.

2. The driving support control device (6) according to claim 1, configured to stop the driving support when a predetermined cancel operation is executed multiple times during the driving support, wherein
the predetermined operation is a first operation of the cancel operation.

3. The driving support control device (6) according to claim 1, configured to:
stop the driving support when a predetermined cancel operation is executed once or multiple times during the driving support; and
judge that the cancel operation has been executed when an operation change amount of the cancel operation is equal to or greater than a predetermined amount, wherein
the predetermined operation is the cancel operation in which the operation change amount is less than the predetermined amount.

4. The driving support control device (6) according to any one of claims 1 to 3, wherein the predetermined operation is an input operation executed by the driver other than driving operations related to acceleration, steering, and braking.

5. A driving support method for a vehicle (100), including:
executing driving support for responding to driver abnormality in response to it being judged that a driver of the vehicle (100) is in an abnormal state in which it is difficult to continue driving of the vehicle (100), wherein
the driving support includes notification control being started after it is judged that the driver is in the abnormal state and issuing a notification to the driver for a predetermined time, and deceleration control being started after the notification control and decelerating the vehicle (100), and
the method further includes extending the predetermined time when a predetermined operation is detected during the notification control, compared to when the predetermined operation is not detected.

6. A computer program which causes a computer to execute processing of:
executing driving support for responding to driver abnormality in response to it being judged that a driver of the vehicle (100) is in an abnormal state in which it is difficult to continue driving of the vehicle (100), wherein
the driving support includes notification control being started after it is judged that the driver is in the abnormal state and issuing a notification to the driver for a predetermined time, and deceleration control being started after the notification control and decelerating the vehicle (100), and
the computer program causes the computer to further execute processing of extending the predetermined time when a predetermined operation is detected during the notification control, compared to when the predetermined operation is not detected.
